Europäisches Patentamt

European Patent Office

Office européen des brevets

(11) Veröffentlichungsnummer: **0 292 664 B1**

# EUROPÄISCHE PATENTSCHRIFT

(45) Veröffentlichungstag der Patentschrift:
11.09.91 Patentblatt 91/37

(51) Int. Cl.⁵: **A47J 43/046**, B01F 15/00

(21) Anmeldenummer: 88104699.9

(22) Anmeldetag: 24.03.88

(54) Arbeitswerkzeug zum Zubereiten von Nahrungsmitteln.

(30) Priorität: 29.05.87 DE 3718161

(43) Veröffentlichungstag der Anmeldung:
30.11.88 Patentblatt 88/48

(45) Bekanntmachung des Hinweises auf die
Patenterteilung:
11.09.91 Patentblatt 91/37

(84) Benannte Vertragsstaaten:
AT CH DE ES FR GB IT LI NL

(56) Entgegenhaltungen:
EP-A- 0 158 032

(56) Entgegenhaltungen:
DE-A- 3 530 651
DE-B- 1 052 079
GB-A- 2 167 312
US-A- 2 003 829
US-A- 2 315 018

(73) Patentinhaber: Braun Aktiengesellschaft
Rüsselsheimer Strasse 22
W-6000 Frankfurt/Main (DE)

(72) Erfinder: Hickel, Sigrun
Haidgesweg 41a
W-6384 Schmitten (DE)
Erfinder: Franke, Wolfgang
Walter-Rietig-Strasse 41
W-6070 Langen (DE)

## Beschreibung

Arbeitswerkzeug zum Behandeln von Nahrungsmitteln in einem Aufnahmebehälter von Küchenmaschinen, das ein von einem Gehäuse umgebenes Getriebe mit einer zum Antrieb des Arbeitswerkzeuges dienende Getriebewelle aufweist, die mit einer von einem Elektromotor der Küchenmaschine antreibbaren Antriebswelle kuppelbar ist, wobei die Getriebewelle und das Getriebe in einem Lagerbock des Arbeitswerkzeuges gelagert sind und wobei der Lagerbock Verbindung mit dem Aufnahmebehälter über ein Kupplungselement miteinander fest kuppelbar sind.

Ein derartiges Arbeitswerkzeug ist bereits aus der US-PS 2,003,829 bekannt. Das Arbeitswerkzeug wird von einem Stirnradgetriebe angetrieben, welches aufgrund der konstruktionsbedingt vielen Zahnräder ziemlich aufwendig baut. Die in den Arbeitsbehälter hineinragenden, die Nahrungsmittel behandelnden und als Schneebesen ausgebildeten Arbeitswerkzeuge führen aufgrund ihrer exzentrischen Lagerung zur Antriebswelle beim Rührvorgang dazu, daß stets auf die Arbeitswelle Biegemomente einwirken, die zu einer erhöhten Belastung der Antriebswelle, ihrer Lageranordnung und einer zusätzlichen Wirkungsgradverschlechterung führen. Dieser Nachteil verstärkt sich dann noch, wenn mit dem Arbeitswerkzeug verhältnismäßig hohe Drehmomente, wie sie beispielsweise bei einem Knethaken auftreten, aufgebracht werden müssen.

Aus der DE-OS 3530651 ist weiterhin ein elektrisch betriebenes Haushaltsgerät zur Zubereitung von Nahrungsmitteln bekannt, auf dessen oberen Ende des Aufnahmebehälters ein Korb mit einem Zitruskegel aufsetzbar ist. Der Zitruskegel wird über ein Planetengetriebe angetrieben, das hierzu über einen zylindrisch ausgebildeten Mitnehmer mit einer Antriebswelle kuppelbar ist. Für den Kuppelvorgang wird der mit dem Getriebe und dem Zitruskegel versehene Behälteraufsatz mit dem zugehörigen Mitnehmer von oben her auf die Antriebswelle aufgesetzt. Bei dieser Anordnung ist es als weniger vorteilhaft anzusehen, daß der Zitruskegel und das Planetengetriebe im Behälteraufsatz integriert sind, was zu erhöhten Herstellkosten führt. Auch durch die Abstützung des Behälteraufsatzes am Rand des Behälters ergibt sich der Nachteil, daß stets Abstützelemente den Behälter radial durchqueren müssen, was den Zugang zum Behälterinnenraum erschwert.

Aufgabe der Erfindung ist es nun, ein Arbeitswerkzeug für eine Küchenmaschine zu schaffen, das mit hohen Drehmomenten beaufschlagbar ist, das einfach und kostengünstig herstellbar ist und das im Behälter besonders stabil zentriert ist.

Diese Aufgabe wird erfindungsgemäß dadurch gelöst, daß am Gehäuse des Arbeitswerkzeuges ein Misch- bzw. Knetwerkzeug ausgebildet ist, daß das Gehäuse im Bereich seines oberen Endes über ein Planetenradgetriebe angetrieben wird und in seinem unteren Bereich auf dem Lagerbock gleitend anliegt und daß das freie Ende des Gehäuses des Arbeitswerkzeuges in einem den Aufnahmebehälter verschließenden Deckel drehbar gelagert ist. Die Ausbildung eines Planetengetriebes in einem Arbeitswerkzeug führt zu einer besonders kleinen Bauweise und ermöglicht auf besonders einfache Weise eine konzentrische Anordnung der die Nahrungsmittel behandelnden Misch- und Knetwerkzeuge zur Antriebswelle.

Durch das Planetengetriebe wird weiterhin erreicht, daß bei drehfester Lagerung des Lagerbocks das eigentliche Gehäuse des Arbeitswerkzeuges in Drehung versetzt wird, an dem erfindungsgemäß die Misch- und Knetwerkzeuge ausgebildet sind. Hierdurch bildet das eigentliche Gehäuse mit den Misch- und Knetwerkzeugen nur ein einziges Formteil, das leicht herstellbar ist. Das Planetenradgetriebe läßt sich im Gehäuse des Arbeitswerkzeuges besonders einfach dann integrieren und montieren, wenn die Planetenräder auf dem Lagerbock gelagert sind. Durch die zweiseitige Lagerung des Arbeitswerkzeugs am Behälter und Deckel und durch die Abstützung des Gehäuses des Arbeitswerkzeugs am Lagerbock können verhältnismäßig hohe Drehmomente erzeugt werden, ohne daß dabei die Lagerung des Arbeitswerkzeuges Schaden nimmt.

Es ist vorteilhaft, daß das Kupplungselement aus am Lagerbock und am Aufnahmebehälter ausgebildeten, sich radial erstreckenden Vorsprüngen besteht, die am Lagerbock an der Innenwandung eines Rohrabschnittes und am Aufnahmebehälter an einem die Antriebswelle umgebenden vom Boden des Aufnahmebehälters sich erhebenden Rohrteil ausgebildet sind. Hierdurch wird eine besonders einfache und bedienungsfreundliche Befestigung des Arbeitswerkzeuges im Aufnahmebehälter erreicht.

Durch die sich radial erstreckenden Vorsprünge, die auf der Innen- bzw. der Außenseite des Lagerbockes vorgegeben sein können, wird ein Verkanten bzw. Verklemmen der Kupplungsteile im Betrieb verhindert. Dies wird dadurch sichergestellt, daß die gedachten Verlängerungen der an den einzelnen Vorsprüngen ausgebildeten Abstützflächen durch den Mittelpunkt des Arbeitswerkzeuges bzw. den Behälter verlaufen. Da auch bei längerem Lauf des Arbeitswerkzeuges und relativ großer Drehmomente kein Verklemmen der zu kuppelnden Teile auftritt, ist ein Verschleiß an den vorwiegend aus Kunststoff hergestellten und daher weniger festen Kupplungselementen nicht möglich. Eine derartige Drehverbindung zwischen der Antriebswelle und dem Arbeitswerkzeug eignet sich zur Übertragung hoher Drehmomente. Dies kann durch große Auflageflächen zwischen den Vorsprüngen noch verbessert werden.

Soll das Arbeitswerkzeug nach dem Knetvorgang wieder aus dem Aufnahmebehälter herausgenommen

EP 0 292 664 B1

werden, so braucht es lediglich ohne Kraftaufwand von der Antriebswelle axial abgezogen werden, nachdem der Deckel vom Behälter entfernt wurde. Hierzu ist es vorteilhaft, daß zur drehfesten Verbindung die am Lagerbock und am Rohrteil ausgebildeten Vorsprünge von einem sägezahnartigen Profil gebildet werden, wobei jeweils der eine Zahnumfangsrand radial nach innen ausgeformt ist, bis über eine Rundung ein neuer Vorsprung mit einer radial nach außen verlaufenden Abstützfläche beginnt.

Damit in das Innere des Planetengetriebes kein Schmutz bzw. Wasser eindringen kann, ist das am Rohrteil anliegende Ende des zylindrisch ausgebildeten Lagerbocks gegenüber dem zylindrischen Abschnitt des Knetwerkzeuges abgedichtet. Als besonders einfache und wirkungsvolle Abdichtung hat sich ein O-Ring bewährt, der vom Ende des Lagerbocks in einer am Zylinder des Knetwerkzeuges ausgebildeten Ringstufe ortsfest gehalten wird.

Im folgenden wird die Erfindung anhand eines Ausführungsbeispiels in der Zeichnung näher erläutert. Es zeigen :

Fig. 1    einen Längsschnitt durch einen Behälter für eine Küchenmaschine zur Zubereitung von Nahrungsmitteln entlang der Linie A-B nach Fig. 3 ;

Fig. 2    ein Arbeitswerkzeug nach der Erfindung, das in den nur teilweise dargestellten Aufnahmebehälter
         mit Deckel eingebaut ist und über eine Antriebswelle angetrieben werden kann ;

Fig. 3    Draufsicht auf den Aufnahmebehälter bei abgenommenem Deckel nach Fig. 1 ;

Fig. 4    Draufsicht auf die an dem Rohrteil des Aufnahmebehälters vorgesehene Kupplungsanordnung mit
         Sägezahnprofil in vergrößerter Darstellung ;

Fig. 5    Einzelteil des Lagerbocks im Schnitt in vergrößerter Darstellung und

Fig. 6    Draufsicht in Richtung X auf die im unteren, inneren Bereich des Lagerbocks vorgesehene Sägeverzahnung.

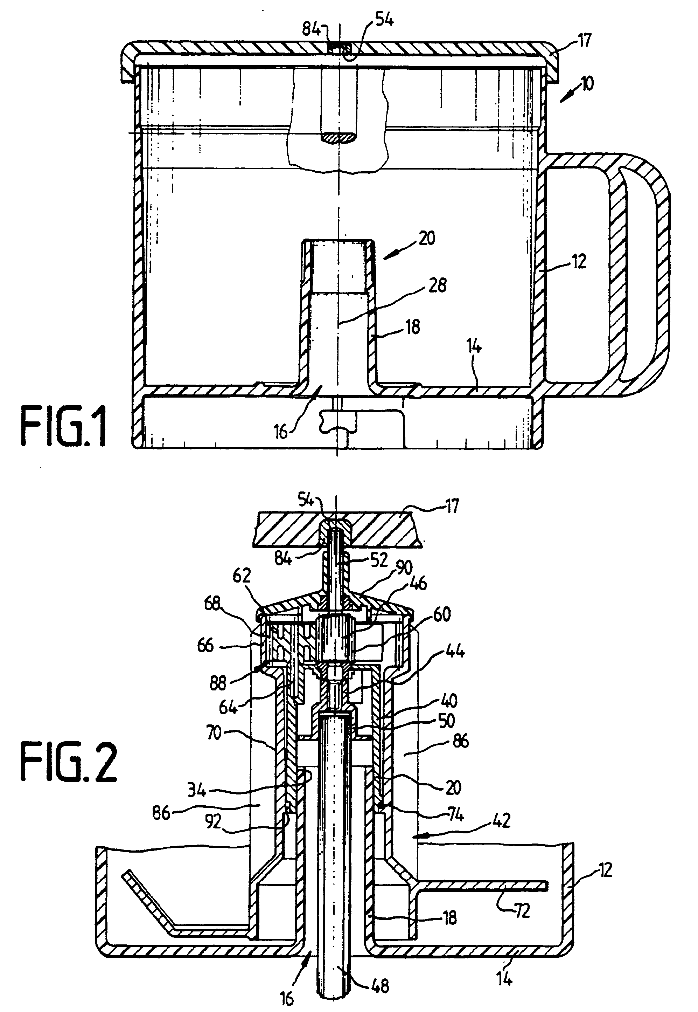

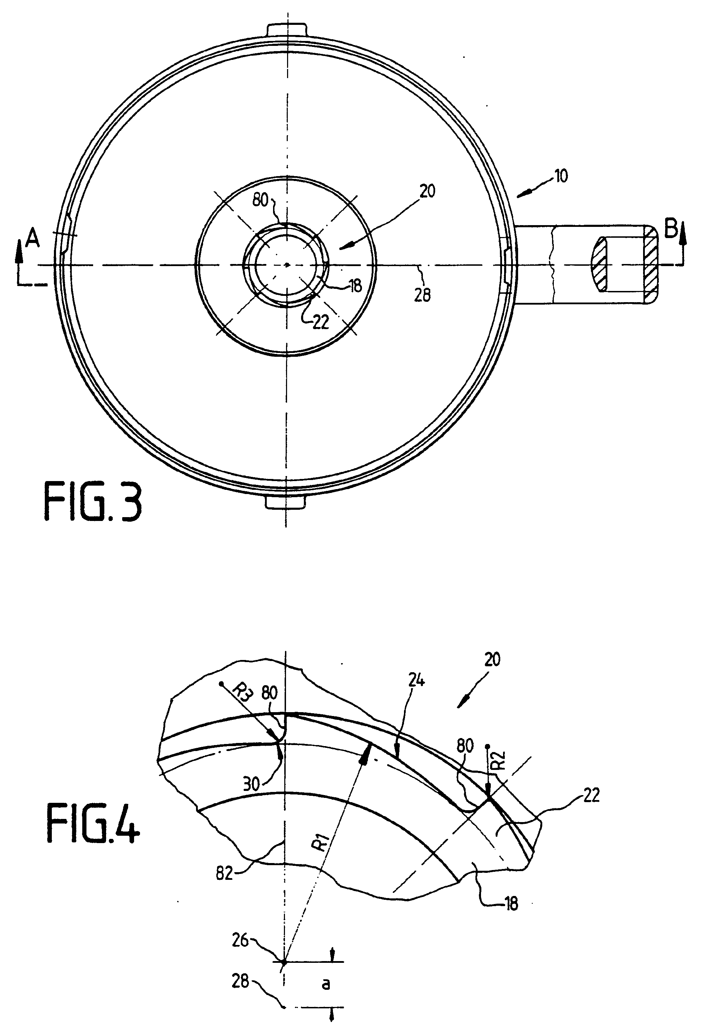

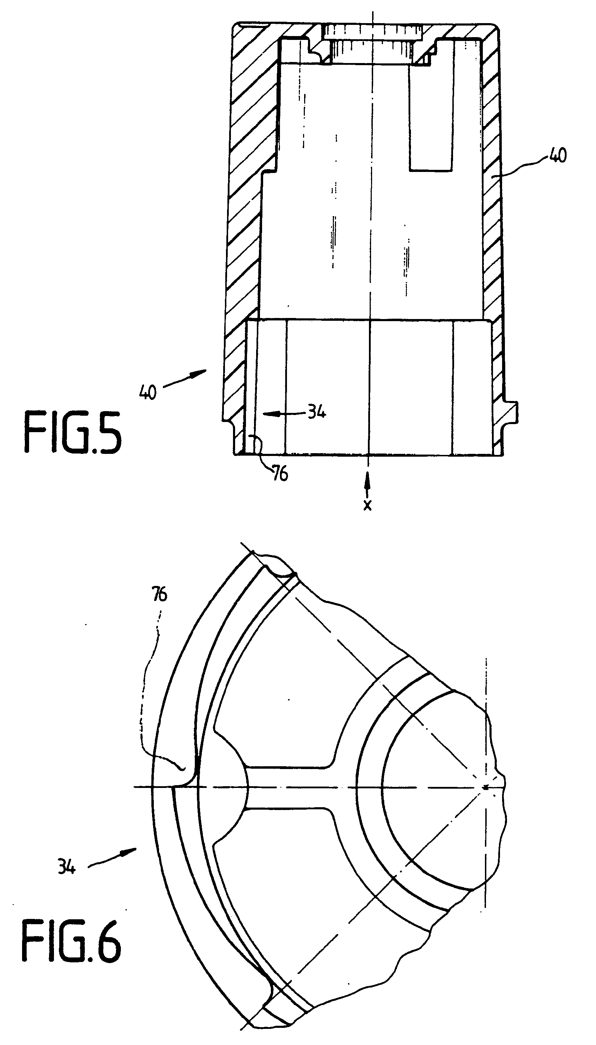

In den Fig. 1 bis 3 ist mit 10 ein Aufnahmebehälter bezeichnet, der aus einer zylindrischen Wand 12 mit einem kreisförmigen Boden 14 besteht. Der Aufnahmebehälter 10 wird mittels eines Deckels 17 verschlossen, der über einen in der Zeichnung nicht näher dargestellten Bajonett-Verschluß an das obere Ende des Aufnahmebehälters 10 anschließbar ist. Im Boden 14 des Aufnahmebehälters 10 befindet sich eine kreisrunde Öffnung 16, an die sich ein zylinderförmiges Rohrteil 18 nach oben anschließt, das sich in das Innere des Aufnahmebehälters 10 erstreckt. Das obere Ende des Rohrteils 18 bildet ein Kupplungselement 20, das, wie aus den Fig. 3 und 4 hervorgeht, aus sich radial erstreckenden, vorzugsweise aus acht gleichmäßig am Umfang des Rohrteils ausgebildeten Vorsprüngen 22 besteht, die zusammen ein Sägezahnprofil bilden.

Die einzelnen Vorsprünge 22 sind am oberen Bereich auf dem Außenumfang des Rohrteils angeformt und verlaufen mit ihrem sichelförmig ausgebildeten Umfangsrand 24 radial nach innen, bis ein neuer Vorsprung 22 mit seiner radial nach außen verlaufenden Abstützfläche 80 beginnt.

Die sägezahnartig ausgebildeten Vorsprünge 22 weisen jeweils eine sich an die Abstützfläche 80 in Umfangsrichtung anschließende Außenoberfläche 24 auf, die in den oberen Kreissegmenten durch einen Radius R1 beschrieben wird. Der Radius R1 weist einen Kreismittelpunkt 26 auf, der im Abstand a zum Mittelpunkt 28 des Rohrteils 18 auf der senkrechten Mittelachse 82 angeordnet ist. Für die unteren Kreissegmente verläuft das Maß a nach unten. Das radial äußerste Ende des Vorsprunges 22 ist abgerundet und wird durch den Radius R2 beschrieben. Ebenfalls ist an der tiefsten Stelle des Vorsprunges 22 eine Abrundung 30 vorgesehen, die durch den Radius R3 definiert wird. Während das beim Knetvorgang durch das Arbeitswerkzeug 42 erzeugte Drehmoment ausschließlich an den Abstützflächen 80 aufgefangen wird, dienen die Abschnitte der Außenoberflächen 24 zur Zentrierung des Arbeitswerkzeugs 42.

Das Kupplungselement 20 des Rohrteiles 18 wirkt mit einem am Lagerbock 40 ausgebildeten Kupplungsteil 34 (siehe Fig. 5 und 6) zusammen. Der Lagerbock 40 läßt sich gemäß Fig. 2 von oben her auf das Rohrteil 18 aufsetzen, ohne daß sich die Kupplungselemente 20, 34 im Betrieb verkanten, so daß auch nach dem Knetvorgang ein leichtes Herausnehmen des Arbeitswerkzeugs 42 vom Rohrteil 18 möglich ist.

Der Lagerbock 40 ist, wie aus Fig. 2 hervorgeht, Teil eines Arbeitswerkzeuges bzw. eines Knetwerkzeuges 42. Anstelle des in Fig. 2 dargestellten Knetwerkzeuges 42 kann auch ein anderes Arbeitswerkzeug zur Zubereitung von Nahrungsmitteln mit dem Lagerbock 40 verbunden werden. Der Lagerbock 40 weist eine Lagerhülse 44 auf, in der eine Getriebewelle 46 drehbar gelagert ist. Die Getriebewelle 46 ist über das vorzugsweise aus einem Innensechskant bestehende Kupplungselement 50 mit dem oberen Ende der entsprechend als Außensechskant ausgebildeten Antriebswelle 48 kuppelbar. Die Antriebswelle 48 erstreckt sich koaxial durch das Rohrteil 18 des Aufnahmebehälters 10 und ist mit einem in einem Küchenmaschinengehäuse, das in der Zeichnung nicht weiter dargestellt ist, ausgebildeten Elektromotor verbunden.

Wie aus Fig. 2 ferner hervorgeht, ist die Getriebewelle 46 mit einem Wellenzapfen 52 versehen, der in einem im Deckel 17 des Aufnahmebehälters 10 in einer Sacklochbohrung 54 befestigten Lager 84 zusätzlich

3

gelagert ist. Wird beispielsweise der Deckel 17 auf den Aufnahmebehälter 10 aufgesetzt und mit diesem über den Bajonett-Verschluß verrastet, so ist das Arbeitswerkzeug 42 in axialer und radialer Richtung zweiseitig gelagert und gesichert, so daß beim Knetvorgang ein Nachobenwandern und Taumeln des Arbeitswerkzeuges 42 ausgeschlossen ist und dadurch auch die Kupplungselemente 20, 34 stes in Eingriff gehalten werden.

Auf der Getriebewelle 46 des im Zylinder 66, 70 ausgebildeten Planetengetriebes 88 ist ein Sonnenrad 60 ausgebildet, das mit einem bzw. mehreren Planetenrädern 62 in Antriebsverbindung steht. Das Planetenrad 62 lagert mittels eines Zapfens 64 in dem Lagerbock 40 und treibt über eine am Innenumfang des Zylinders 66 vorgesehene Ringverzahnung 68 den Zylinder 66, 70 an. Der Zylinder 66 bildet das obere Ende des eigentlichen Arbeitswerkzeugs 42, das von einem Deckel 90 nach oben verschlossen ist, der vom Wellenzapfen 52 durchdrungen wird. An den Zylinder 66 schließt sich ein im Durchmesser kleinerer Zylinder 70 nach unten an, an dessen unterem Ende Misch- Knetwerkzeuge 72 angeformt sind. Weiterhin sind am Außenumfang des Zylinders 70 axial verlaufende Rippen 86 angeformt, die vorwiegend zum Kneten des Teiges dienen.

Der Zylinder 70 des Arbeitswerkzeugs 42 stützt sich im mittleren Bereich auf dem Außenumfang des Lagerbockes 40 ab. Zwischen dem unteren Ende des Lagerbockes 40 und dem mittleren Teil des Zylinders 70 befindet sich eine Ringdichtung 74, die verhindert, daß Nahrungsmittel bzw. Flüssigkeit in den Innenraum des Lagerbockes 40 und somit in das Planetengetriebe 88 eindringen können.

Zur Montage wird das in Fig. 2 dargestellte Arbeitswerkzeug 42 mit seinem Lagerbock 40 auf das Kupplungselement 20 des Rohrteils 18 aufgesetzt. Danach läßt sich der Deckel 17 mit seinem zugehörigen Lager 84 auf den Wellenzapfen 52 aufsetzen und sichert durch Verrasten des Deckels 17 auf dem Behälter 10 das Arbeitswerkzeug in der in Fig. 2 dargestellten Betriebsstellung axial und radial. Soll das Arbeitswerkzeug 42 gegen ein anderes ausgewechselt werden, so braucht lediglich der Deckel 17 abgenommen zu werden, um anschließend das Arbeitswerkzeug 40 vom Rohrteil 18 durch Anheben abzukuppeln. Die vorteilhafte Ausbildung der einzelnen Vorsprünge 22 sowie der als Gegenstück ausgebildeten Vorsprünge 76 verhindern ein Festklemmen oder Verkanten des Lagerbockes 40 auf dem Rohrteil 18. Durch diese Anordnung werden somit während des Knetvorgangs Beschädigungen an den Kupplungselementen 34 und 50 verhindert.

Die Wirkungsweise des erfindungsgemäßen Arbeitswerkzeugs ist folgende :

Während das Arbeitswerkzeug 42 mit seinem Lagerbock 40 auf dem Rohrteil 18 aufgesetzt wird, verbindet sich selbsttätig die Antriebswelle 48 mit dem Kupplungselement 50 der Lagerhülse 44 drehfest. Wird der Antriebsmotor eingeschaltet, so versetzt die sich drehende Antriebswelle 48 die Lagerhülse 44 in Drehung. Durch die Drehung der Lagerhülse 44 wird gleichzeitig die Getriebewelle 46 mit in Drehung versetzt, deren am Außenumfang ausgebildetes Sonnenrad 16 das Planetenrad 62 antreibt. Da das Planetenrad 62 im Lagerbock 40 drehbar gelagert ist, der Lagerbock 40 aber drehfest am Rohrteil 18 im Behälter 10 angeordnet ist, wird der Zylinder 66, 70, an dem in seinem unteren Bereich die Knetwerkzeuge 72 ausgebildet sind, in Drehung versetzt, wodurch im Behälter 10 vorhandene Nahrungsmittel bearbeitet werden können. Die Drehung des Zylinders 70 erfolgt über die mit dem Planetenrad 62 in Eingriff stehende Ringverzahnung 68. Dadurch, daß das Arbeitswerkzeug 42 zum einen am Rohrteil 18 drehfest und zum anderen über den Wellenzapfen 52 im Lager 84 drehbar gelagert ist, ist das Arbeitswerkzeug 42 im Behälter 10 besonders stabil zentriert. Der Deckel 90, der mit dem Zylinder 66 formschlüssig und dicht verbunden ist, zentriert die Zylinder 66, 70 auf dem Wellenzapfen 52. Der untere Abschnitt des Zylinders 70 wird an der radial äußeren Mantelfläche des Lagerbocks 40 zentriert und gedichtet. Durch das Planetengetriebe können mit hochdrehenden Motoren geringer Leistung verhältnismäßig hohe Drehmomente erzeugt werden.

## Patentansprüche

1. Arbeitswerkzeug (42) mit einem Misch- bzw. Knetwerkzeug (72) zur Bearbeitung von Nahrungsmitteln mittels einer einen Aufnahmebehälter (10) aufweisenden Küchenmaschine, welches ein von einem Gehäuse (70, 90) umgebenes Getriebe (88) mit einer zum Antrieb des Arbeitswerkzeuges (42) dienenden Getriebewelle (46) aufweist, die mit einer von einem Elektromotor der Küchenmaschine antreibbaren Antriebswelle (48) kuppelbar ist, wobei die Getriebewelle (46) und das Getriebe (88) in einem Lagerbock (40) des Arbeitswerkzeuges (42) gelagert sind und wobei der Lagerbock (40) über ein Kupplungselement (20) mit einem am Aufnahmebehälter (10) ausgebildeten Kupplungsteil (34) drehfest kuppelbar ist, **dadurch gekennzeichnet, daß** das eigentliche Gehäuse (70) des Arbeitswerkzeuges (42) gleichzeitig auch das Misch- bzw. Knetwerkzeug (72) bildet, daß das Gehäuse (70) im Bereich seines oberen Endes über ein Planetenradgetriebe (88) angetrieben wird und in seinem unteren Bereich auf dem Lagerbock (40) gleitend anliegt und daß das obere Ende des Arbeitswerkzeuges (42) in einem den Aufnahmebehälter (10) verschließenden Deckel (17) drehbar gelagert ist.

2. Arbeitswerkzeug nach Anspruch 1, **dadurch gekennzeichnet**, daß die Planetenräder (62) des Planetengetriebes (88) auf dem Lagerbock (40) gelagert sind.

3. Arbeitswerkzeug nach Anspruch 1, **dadurch gekennzeichnet**, daß das Kupplungselement (20) aus am Lagerbock (40) und am Aufnahmebehälter (10) ausgebildeten, sich radial erstrecken den und ineinandergreifenden Vorsprüngen (76, 22) besteht und daß die Vorsprünge (76) am Lagerbock (40) an einer Innenwandung eines Rohrabschnittes und am Aufnahmebehälter (10) an einem die Antriebswelle (48) umgebenden, vom Boden (14) des Aufnahmebehälters (10) sich erhebenden Rohrteil (18) ausgebildet sind.

4. Arbeitswerkzeug nach Anspruch 3, **dadurch gekennzeichnet**, daß die Vorsprünge (22, 76) Abstützflächen (80) aufweisen, deren gedachte Verlängerung durch den Mittelpunkt (28) des Behälters (10) bzw. des Arbeitswerkzeuges (42) verlaufen.

5. Arbeitswerkzeug nach Anspruch 3, **dadurch gekennzeichnet**, daß die am Lagerbock (40) und am Rohrteil (18) ausgebildeten Vorsprünge (22, 76) zur drehfesten Verbindung von einem sägezahnartigen Profil gebildet werden, wobei jeweils der eine Zahnumfangsrand (24) radial nach innen ausgeformt ist, bis über eine Rundung (R3) ein neuer Vorsprung (22, 76) mit einer radial nach außen verlaufenden Abstützfläche (80) beginnt.

6. Arbeitswerkzeug nach Anspruch 3, **dadurch gekennzeichnet**, daß das am Rohrteil (18) anliegende Ende des zylindrisch ausgebildeten Lagerbockes (40) gegenüber dem zylindrischen Abschnitt (70) des Knetwerkzeuges (72) abgedichtet ist.

7. Arbeitswerkzeug nach Anspruch 6, **dadurch gekennzeichnet**, daß die Dichtung von einem O-Ring (74) gebildet wird, der vom Ende des Lagerbockes (40) in einer am Zylinder (70) des Knetwerkzeuges (72) ausgebildeten Ringstufe (92) ortsfest gehalten wird.

## Claims

1. A processing tool (42) with a mixing or kneading tool (72) for processing food materials by means of a food processing apparatus having a container (10), said tool comprising a gear train (88) which is surrounded by a housing (70, 90) and has a gear shaft (46) serving to drive the processing tool (42), said gear shaft being adapted to be coupled to a drive shaft (48) which is adapted to be driven by an electric motor of the food processing apparatus, with said gear shaft (46) and said gear train (88) being carried in a bearing bracket (40) of the processing tool (42), and with said bearing bracket (40) being adapted to be coupled to a coupling member (34) provided on the container (10) by means of a coupling element (20) in a manner preventing relative rotation, **characterized in that** the actual housing (70) of the processing tool (42) provides at the same time the mixing or kneading tool (72), that the housing (70) is driven by a planetary gear train (88) in the area of its upper end and rests in its lower area on the bearing bracket (40) in a sliding relationship thereto, and that the upper end of the processing tool (42) is journaled for rotary movement in a lid (17) closing the container (10).

2. The processing tool as claimed in claim 1, **characterized in that** the planetary gears (62) of the planetary gear train (88) are supported on the bearing bracket (40).

3. The processing tool as claimed in claim 1, **characterized in that** the coupling element (20) is comprised of radially extending and interengaging projections (76, 22) provided on the bearing bracket (40) and on the container (10), and that the projections (76) on the bearing bracket (40) are provided on an inner wall of a tubular section while the projections on the container (10) are provided on a tubular member (18) surrounding the drive shaft (48) and extending upwardly from the bottom (14) of the container (10).

4. The processing tool as claimed in claim 3, **characterized in that** the projections (22, 76) include supporting surfaces (80) whose imaginary extension passes through the center (28) of the container (10) or the processing tool (42).

5. The processing tool as claimed in claim 3, **characterized in that** the projections (22, 76) provided on the bearing bracket (40) and on the tubular member (18) are profiled in saw-tooth fashion to provide a connection preventing relative rotation, with the periphery (24) of a respective tooth being formed radially inwardly until, at a radiused portion (R3), a new projection (22, 76) begins with a radially outwardly extending supporting surface (80).

6. The processing tool as claimed in claim 3, **characterized in that** the end of the cylindrical bearing bracket (40) abutting the tubular member (18) is sealed relative to the cylindrical portion (70) of the kneading tool (72).

7. The processing tool as claimed in claim 6, **characterized in that** the seal is formed by an O-ring (74) held in a fixed position by the end of the bearing bracket (40) in an annular step (92) provided on the cylinder (70) of the kneading tool (72).

## Revendications

1. Outil (42) avec outils de mélangeage et de pétrissage (72) pour la préparation des aliments dans un bol (10) de robot ménager, présentant une transmission (88) habillée d'un boîtier (70, 90) et un arbre de transmission (46) destiné à entraîner l'outil (42), reliés à un arbre d'entraînement (48) pouvant être mû par un moteur électrique du robot ménager, l'arbre de transmission (46) et la transmission (88) étant montés dans une selle d'appui (40) de l'outil (42) et cette selle d'appui (40) pouvant être couplée par un élément de couplage (20) avec un élément de couplage (34) formé sur le bol (10), caractérisé en ce que le boîtier (70) de l'outil (42) forme simultanément un outil de mélangeage ou de pétrissage (72), en ce que le boîtier (70) est entraîné au niveau de son extrémité supérieure par une transmission à planétaires (88) et repose de manière à pouvoir glisser par son extrémité inférieure sur la selle d'appui (40) et en ce que l'extrémité supérieure de l'outil (42) est montée de manière à pouvoir tourner dans un couvercle (17) fermant le bol (10).

2. Outil selon la revendication 1, caractérisé en ce que les roues planétaires (62) de la transmission à planétaires (88) sont montées sur la selle d'appui (40).

3. Outil selon la revendication 1, caractérisé en ce que l'élément de couplage (20) est constitué de saillies (76, 22) formées sur la selle d'appui (40) et sur le bol (10), s'étendant radialement et s'engageant les unes dans les autres et en ce que les saillies (76) de la selle d'appui (40) sont formées sur une paroi interne d'une section tubulaire et celles du bol (10) sont formées sur une section tubulaire (18) s'élevant du fond (14) du bol (10) et entourant l'arbre d'entraînement (48).

4. Outil selon la revendication 3, caractérisé en ce que les saillies (22, 76) présentent des surfaces d'appui (80) dont la prolongation imaginaire passe par le centre (28) du bol (10) ou de l'outil (42).

5. Outil selon la revendication 3, caractérisé en ce que les saillies (22, 76) formées sur la selle d'appui (40) et sur la section tubulaire (18) sont formées pour constituer une liaison solidaire d'un profil en dents de scie où l'un des bords délimitant la dent (24) est creusé radialement vers l'intérieur jusqu'à ce que, par un arrondi (R3) commence une nouvelle saillie (22, 76) avec une surface d'appui (80) orientée radialement vers l'extérieur.

6. Outil selon la revendication 3, caractérisé en ce que l'extrémité de la selle d'appui (40) de forme cylindrique reposant sur la section tubulaire (18) est rendue étanche par rapport à la section cylindrique (70) de l'outil de pétrissage (72).

7. Outil selon la revendication 6, caractérisé en ce que le joint est un joint torique (74) qui est maintenu en place par l'extrémité de la selle d'appui (40) dans un gradin annulaire (92) formé sur le cylindre (70) de l'outil de pétrissage (72).

FIG.1

FIG.2

EP 0 292 664 B1

FIG.3

FIG.4

8

FIG.5

FIG.6